# EUROPÄISCHE PATENTSCHRIFT

(11) **EP 3 368 272 B1**
(45) Veröffentlichungstag und Bekanntmachung des Hinweises auf die Patenterteilung: **22.07.2020**
(21) Anmeldenummer: 16797452.6
(22) Anmeldetag: 20.10.2016
(51) Int. Cl.: B29C 65/00, C23C 22/07, C23C 22/36, C23C 22/42, C23C 28/00

(54) **METALL-KUNSTSTOFF-VERBUNDBAUTEIL UND VERFAHREN ZUR HERSTELLUNG EINES SOLCHEN VERBUNDBAUTEILS**
METAL-PLASTIC COMPOSITE ELEMENT AND METHOD FOR MANUFACTURING SUCH A COMPOSITE ELEMENT
ÉLÉMENT COMPOSITE EN MÉTAL-PLASTIQUE ET PROCÉDÉ DE FABRICATION D'UN TEL ÉLÉMENT COMPOSITE

(30) Priorität: 30.10.2015 DE 102015118597
(43) Veröffentlichungstag der Anmeldung: 05.09.2018
(73) Patentinhaber: Salzgitter Flachstahl GmbH, 38239 Salzgitter (DE)
(72) Erfinder: WEDEMEIER, Andreas, 38110 Braunschweig (DE); POLLER, Benjamin, 30167 Hannover (DE)
(74) Vertreter: Meissner, Peter E.
(86) Internationale Anmeldenummer: PCT/DE2016/100489
(87) Internationale Veröffentlichungsnummer: WO 2017/071682

(56) Entgegenhaltungen:
- EP-A1- 1 508 398
- EP-A1- 2 762 289
- EP-A2- 0 786 336
- DE-A1-102008 061 166
- DE-A1-102012 213 455
- DE-B3-102009 051 899
- JP-A- 2011 235 570
- US-A1- 2011 008 644
- US-A1- 2015 217 545

## Beschreibung

Die Erfindung betrifft ein Metall/Kunststoff-Verbundbauteil und ein Verfahren zur Herstellung eines solchen Verbundbauteils.

Derartige Verbundbauteile werden als Hybridbauteile zum Beispiel in der Automobilindustrie für diverse Applikationen als Leichtbauwerkstoff zunehmend verwendet, um das Fahrzeuggewicht und damit die CO₂-Emission zu reduzieren.

Bei diesen Verbundbauteilen wird auf ein kalt- oder warmumgeformtes Trägerbauteil aus Metall, welches zum Beispiel aus einem monolithischen Stahlblech oder aus einem Sandwichblech mit zwei Stahldeckblechen und dazwischen liegender Kunststoffschicht bestehen kann, eine thermoplastische Kunststoffschicht zum Beispiel mittels Hinterspritzen oder Extrusion aufgebracht. Diese Kunststoffschicht dient der Verstärkung bzw. Versteifung des Bauteils im Hinblick auf die mechanischen Beanspruchungen im Betrieb, da sie die Torsions- und Crashsteifigkeit des Bauteils deutlich erhöht. Als Kunstoffe können zum Beispiel Polyethylen (PE), Polypropylen (PP), Polyetheretherketon (PEEK), Polyphenylensulfid (PPS), Polyvinylchlorid (PVC) oder Polyamide, wie Polyamid 6 (PA6), Polyamid 6.6 (PA6.6) oder Polyphthalamide (PPA) mit oder ohne Faserverstärkung zum Einsatz kommen.

Allerdings ist die Anbindung des Polymers an den metallischen Werkstoff schwierig. Materialschrumpf des Polymers und unterschiedliche Ausdehnungskoeffizienten der eingesetzten Materialien führen zu einer Enthaftung zwischen Metallbauteil und Polymerstruktur, so dass die gewünschten mechanischen Eigenschaften des Verbundwerkstoffs nicht erreicht werden. Daher ist ohne Vorbehandlung der Metalloberfläche die stoffschlüssige Anbindung des angespritzten Kunststoffs am metallischen Trägerbauteil aufgrund unterschiedlicher chemischer und physikalischer Eigenschaften der beiden Werkstoffe gering.

Aus der DE 10 2008 040 967 A1 sind verschiedene Möglichkeiten bekannt, um einen Verbund zwischen Stahl und Kunststoff zu erreichen. Beispielhaft seien hier die mechanische Verklammerung durch Hinterschneidungen im Trägerbauteil, Klebstoffe als Haftvermittler für einen stoffschlüssigen Verbund, sowie die Oberflächenbehandlung des Kunststoffes durch Plasmabehandlung genannt.

Die genannten Möglichkeiten zur Haftungsverbesserung von Kunststoff und Stahl sind entweder sehr aufwändig und teuer oder bringen im Fall der rein mechanischen Verklammerung nicht die erhoffte Verbesserung der mechanischen Eigenschaften des Verbundbauteils.

Aufgabe der Erfindung ist es, ein Metall/Kunststoff-Verbundbauteil anzugeben, welches gegenüber den bekannten Verbundbauteilen bei mindestens gleich guten mechanischen Eigenschaften kostengünstiger herstellbar ist. Des Weiteren soll ein Verfahren zur Herstellung eines solchen Verbundbauteils angegeben werden.

Für das Verbundbauteil wird diese Aufgabe mit den Merkmalen des Anspruchs 1 und für das Verfahren mit den Merkmalen des Anspruchs 9 gelöst. Vorteilhafte Weiterbildungen sind Gegenstand von Unteransprüchen.

Die Lehre der Erfindung umfasst ein Metall/Kunststoff-Verbundbauteil, bei dem das metallische Bauteil mit einem darauf aufgebrachten thermoplastischen Kunststoff stoffschlüssig verbunden ist, welches dadurch gekennzeichnet ist, dass für einen stoffschlüssigen Haftungsverbund zwischen dem metallischem Bauteil und dem Kunststoff, das metallische Bauteil auf den mit dem Kunststoff in Kontakt tretenden Oberflächenbereichen eine aus einer Phosphatierung bestehenden korrosionsschützenden Beschichtung aufweist.

Wenngleich eine Phosphatierung als korrosionsschützender Untergrund für eine nachfolgende Lackierung schon eine erhebliche Verbesserung der Haftung des Kunststoffs auf der phosphatierten Metalloberfläche ergibt, ist für eine weitere Verbesserung des stoffschlüssigen Haftungsverbundes in einer vorteilhaften Weiterbildung der Erfindung vorgesehen, dass auf die Phosphatierung vor dem Aufbringen des Kunststoffs eine kathodische Tauchlackierung (auch KTL-Beschichtung genannt) aufgebracht ist. Die kathodische Tauchlackierung ist erfindungsgemäß anschließend entweder gemeinsam mit dem darauf aufgebrachten Kunststoff oder vor Aufbringen des Kunststoffes bei einer Temperatur von 160 °C bis 220 °C, vorteilhaft zwischen 160°C und 180°C, eingebrannt.

Im Zuge von umfangreichen Versuchen wurde überraschend erkannt, dass abweichend von den üblicherweise für Metall/Kunststoff-Verbundbauteile eingesetzten Haftvermittlern oder Klebstoffen die insbesondere in der Automobilindustrie angewandte Phosphatierung hervorragend geeignet ist, um einen hervorragenden stoffschlüssigen Haftverbund zwischen dem Trägerbauteil aus Metall und dem aufzubringenden Kunststoff sicherzustellen. Dies spart einen zusätzlichen Fertigungsschritt für das Aufbringen eines Haftvermittlers oder Klebstoffes und die Kosten für den Haftvermittler oder den Klebstoff selbst. Eine auf der Phosphatschicht aufgebrachte kathodische Tauchlackierung (KTL) zur Grundierung bzw. Vorbeschichtung von zu lackierenden Fahrzeugbauteilen verbessert nochmals eine ohnehin schon sehr gute Haftung auf der phosphatierten Metalloberfläche.

Das metallische Bauteil wird dabei vorteilhaft aus einem kalt- oder warmumgeformten Stahlblechzuschnitt hergestellt, welches anschließend gereinigt und danach phosphatiert wird und anschließend optional eine kathodische Tauchlackierung erhält. Die kathodische Tauchlackierung wird entweder mit dem darauf aufgebrachten Kunststoff oder vor Aufbringen des Kunststoffes eingebrannt. Als Stahlblech zur Herstellung des metallischen Bauteils kann zum Beispiel ein monolithisches Blech oder ein Metall/Kunststoff/Metall-Sandwichblech eingesetzt werden.

Die Anwendung der Erfindung ist im Grundsatz für Bauteile aus den verschiedensten metallischen Werkstoffen denkbar, insbesondere jedoch für Stahl, Aluminium oder Magnesium.

Entsprechend umfasst das erfindungsgemäße Verfahren zur Herstellung eines Metall/Kunststoff-Verbundbauteils ein metallisches Bauteil, welches mit einem darauf aufgebrachten thermoplastischen Kunststoff stoffschlüssig verbunden wird, welches dadurch gekennzeichnet ist, dass für einen stoffschlüssigen Haftungsverbund zwischen dem metallischem Bauteil und dem Kunststoff das metallische Bauteil auf den mit dem Kunststoff in Kontakt tretenden Oberflächenbereichen vor dem Aufbringen des Kunststoffs eine korrosionsschützende Beschichtung in Form einer Phosphatierung aufgetragen wird.

Soll gemäß einer vorteilhaften Weiterbildung der Erfindung zur weiteren Verbesserung der Haftung des Kunststoffs auf die Phosphatierung eine kathodische Tauchlackierung aufgebracht werden, wird diese entweder gemeinsam mit dem anschließend auf die KTL-Beschichtung aufgebrachten Kunststoff oder vor Aufbringen des Kunststoffes bei einer Temperatur von 160 °C bis 220 °C, vorteilhaft zwischen 160°C und 180°C, eingebrannt.

Die kathodische Tauchlackierung ist ein elektrochemisches Verfahren zur Applikation wasserverdünnbarer Lacke (Elektrotauchlacke) auf elektrisch leitfähigen Substraten. Das elektrisch leitfähige Substrat, auch Werkstück oder Bauteil genannt, wird in ein Lackbad eingetaucht, zwischen dem Werkstück und einer Gegenelektrode wird ein elektrisches Gleichspannungsfeld angelegt, der ionisierte Lack entlädt sich und koaguliert dabei auf dem Werkstück, wodurch die Beschichtung des Werkstückes aufgebaut wird. Der abgeschiedene Lackfilm hat häufig einen Festkörpergehalt von 80 bis 90% und ist nicht mehr wasserverdünnbar, so dass die anhaftende Badflüssigkeit mit Wasser abgewaschen werden kann. Der Lackfilm wird anschließend durch Einbrennen gehärtet.

Als Kunstoffe können erfindungsgemäß zum Beispiel Polyethylen (PE), Polypropylen (PP), Polyetheretherketon (PEEK), Polyphenylensulfid (PPS), Polyvinylchlorid (PVC) oder Polyamide wie Polyamid 6 (PA6),Polyamid 6.6 (PA6.6) oder Polyphthalamide (PPA) mit oder ohne Faserverstärkung zum Einsatz kommen, die als extrudierte, geschäumte oder aufgespritzte Schicht, als Folie oder Tape auf das metallische Bauteil aufgebracht werden.

Erfindungsgemäß ist weiterhin vorteilhaft vorgesehen, dass das metallische Bauteil vor dem Aufbringen der Phosphatierung und der optionalen KTL-Beschichtung mit einem korrosionsschützenden metallischen Überzug versehen ist. Der metallische Überzug kann aus Zink oder überwiegend aus Zink bestehen und als Schmelztauchüberzug oder als elektrolytisch abgeschiedener Überzug auf dem metallischen Bauteil ausgebildet sein.

Gegenüber dem bekannten Stand der Technik, sind bei dem erfindungsgemäßen Metall/Kunststoff-Verbundbauteil keine separat aufzubringenden Haftvermittler oder Klebstoffe notwendig, um eine ausreichende Haftung zwischen metallischem Bauteil und thermoplastischem Kunststoff sicherzustellen.

Die innovative Idee bei einer automobiltypischen Vorbehandlung einer Karosserie für eine Lackierung besteht darin, den aufzubringenden Kunststoff, zum Beispiel einen Thermoplasten, mit vorzugsweise ähnlicher Verarbeitungstemperatur wie die Temperatur im Einbrennofen nach der Applikation der kathodischen Tauchlackierung aufzubringen und diesen beim Einbrennen der KTL-Beschichtung aufzuschmelzen und so eine stoffschlüssige Anbindung des Kunststoffs an die KTL-Beschichtung zu realisieren.

Alternativ wird vor Aufbringen des Kunststoffes die KTL-Beschichtung bei einer Temperatur von 160 °C bis 220 °C, vorteilhaft zwischen 160°C und 180°C, eingebrannt und anschließend der thermoplastische Kunststoff hierauf appliziert. Der Vorteil beim letzteren Verfahren ist, dass hierbei auch Kunststoffe mit höheren Verarbeitungstemperaturen als die Einbrenntemperatur der KTL-Beschichtung aufgebracht werden können, wie beispielsweise Polyamid PA6.

Bei beiden Verfahrensvarianten wird erfindungsgemäß die ohnehin bei Fahrzeugkarosserien notwendige Phosphatierung und die darauf aufgebrachte KTL-Beschichtung gleichzeitig als Haftvermittler zwischen metallischem Bauteil und dem darauf aufgebrachten Kunststoff verwendet.

Die Vorteile ergeben sich daraus, dass eine Phosphatierung und eine KTL-Beschichtung bei der Automobilherstellung generell aufgebracht werden. Die Applikation eines notwendigen Haftvermittlers ist hingegen ein zusätzlicher Prozessschritt, auf den durch die Verwendung der KTL-Beschichtung als haftvermittelndes Medium verzichtet werden kann. Somit kann auf eine zusätzlich notwendige Prozessstufe verzichtet werden. Zudem ist kein weiterer Haftvermittler nötig, d.h.:
- keine zusätzlichen Materialkosten
- keine weiteren Lösemittel

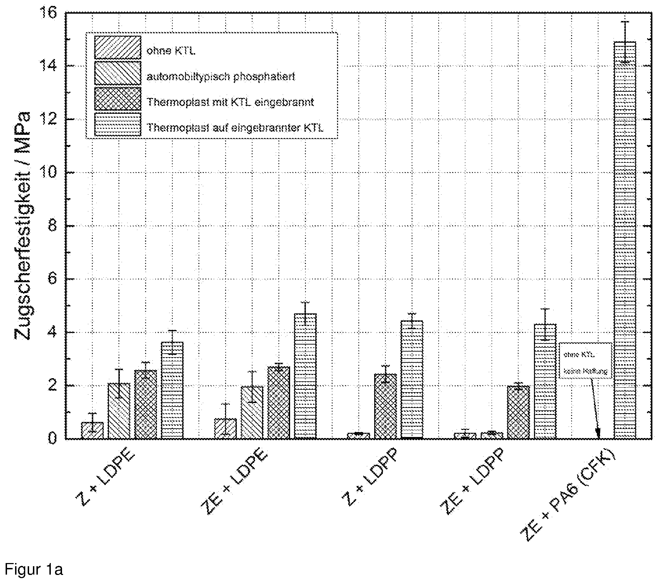

Für die Versuche wurden auf ein elektrolytisch verzinktes (ZE) bzw. schmelztauchbeschichtetes (Z) Stahlblech verschiedene Thermoplaste wie LDPE, LDPP und PA6 (CFK) aufgebracht. Das Polyamid 6 war mit 60% Carbonfasern verstärkt. Anschließend wurde die Zugscherfestigkeit in Anlehnung an DIN EN 1465 mit und ohne aufgebrachte Phosphatierung bzw. KTL-Beschichtung inklusive Phosphatierung ermittelt. Untersucht wurden gemäß **Figur 1** die Varianten "blanke Stahloberfläche" (Balken "ohne KTL"), "automobiltypisch phosphatiert" (Balken "automobiltypisch phosphatiert"), und die beiden Varianten, bei der der Thermoplast vor dem Einbrennen der KTL aufgebracht wird (Balken "Thermoplast mit KTL eingebrannt"), bzw. der Thermoplast auf die bereits eingebrannte KTL-Beschichtung aufgebracht wird (Balken "Thermoplast auf eingebrannter KTL").

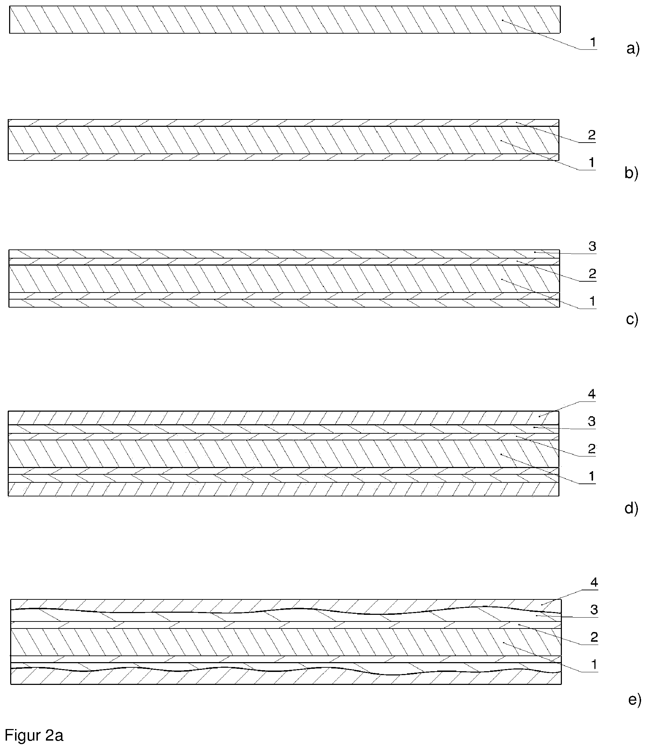

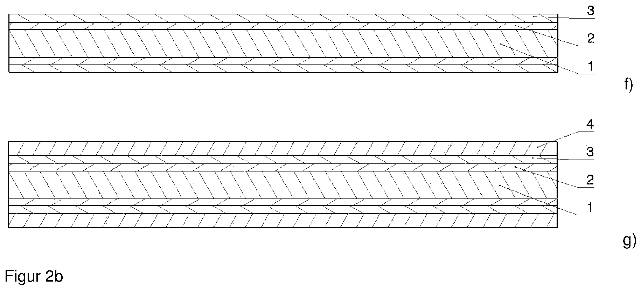

Wie die Versuchsergebnisse gemäß **Figur 1** für die Zugscherfestigkeit an Blechproben mit darauf appliziertem Kunststoff (s.a. **Figuren 2a** **und** **2b**) zeigen, kann eine deutliche Haftungsverbesserung im Vergleich zu einer blanken Stahloberfläche (Balken "ohne KTL") schon durch eine Phosphatierung als Vorbehandlung (Balken automobiltypisch phosphatiert") für einen Lackaufbau erreicht werden. Durch eine KTL-Beschichtung kann die Haftung im Stahl/Kunststoffverbund nochmals deutlich gesteigert werden, wobei die besten Ergebnisse erreicht werden, wenn der Thermoplast auf die bereits eingebrannte KTL-Beschichtung aufgebracht wird.

Während bei einer blanken Oberfläche (Balken "ohne KTL") des Stahlbleches praktisch keine Haftung mit dem Kunststoff zu erzielen war, bringt insbesondere die Applikation des Kunststoffs auf eine bereits eingebrannte KTL-Beschichtung eine sehr deutliche Verbesserung der Haftung. Erwartungsgemäß werden bei Polyamid PA6 mit 60% Carbonfasern die besten Haftungswerte auf der eingebrannten KTL-Beschichtung erreicht.

Der grundsätzliche Aufbau der beiden untersuchten Verfahrensvarianten, bei der der Thermoplast vor dem Einbrennen der KTL aufgebracht wird und bei der der Thermoplast auf die bereits eingebrannte KTL-Beschichtung aufgebracht wird, ist in den **Figuren 2a** und **2b** anhand eines Metall/Kunststoff-Verbundbleches dargestellt. Die verschiedenen Verarbeitungszustände sind mit den Buchstaben a) bis g) gekennzeichnet. Ein entsprechender Aufbau sowie die Abfolgen der notwendigen Arbeitsschritte ergeben sich sinngemäß ebenso für die Herstellung von Metall/Kunststoff-Verbundbauteilen.

Gemäß der ersten Verfahrensvariante ("Thermoplast mit KTL eingebrannt") nach **Figur 2a** wird zunächst ein Stahlblech 1 (Zustand a) mit einer Phosphatierung 2 versehen (Zustand b), auf die eine KTL-Beschichtung 3 aufgebracht wird (Zustand c). Auf die KTL-Beschichtung 3 wird anschließend der thermoplastische Kunststoff 4 als Folie, Extrusions- oder Spritzschicht aufgebracht (Zustand d). Abschließend erfolgt das Einbrennen der KTL-Beschichtung bzw. Aufschmelzen des thermoplastischen Kunststoffes 4 (Zustand e).

**Figur 2b** zeigt die alternative Verfahrensvariante ("Thermoplast auf eingebrannter KTL"), bei der das Stahlblech 1 zunächst eine Phosphatierung 2 und KTL-Beschichtung 3 erhält, welche anschließend eingebrannt wird (Zustand f). Auf die eingebrannte KTL-Beschichtung 3 wird anschließend der thermoplastische Kunststoff 4 in Form einer Folie, Extrusions- oder Spritzschicht aufgebracht (Zustand g). Bei beiden Verfahrensvarianten wird eine stoffschlüssige Verbindung zwischen Stahlblech und thermoplastischem Kunststoff mit einer hervorragenden Haftung erreicht.

## Patentansprüche

1. Metall/Kunststoff-Verbundbauteil, bei dem das metallische Bauteil mit einem darauf aufgebrachten thermoplastischen Kunststoff stoffschlüssig verbunden ist,
wobei
für einen stoffschlüssigen Haftungsverbund zwischen dem metallischem Bauteil und dem Kunststoff das metallische Bauteil auf den mit dem Kunststoff in Kontakt tretenden Oberflächenbereichen eine aus einer Phosphatierung bestehenden korrosionsschützenden Beschichtung aufweist,
**dadurch gekennzeichnet,**
**dass** auf der Phosphatierung eine kathodische Tauchlackierung aufgebracht wurde, und diese entweder gemeinsam mit dem darauf aufgebrachten Kunststoff oder vor Aufbringen des Kunststoffes bei einer Temperatur von 160 °C bis 220°C, vorteilhaft zwischen 160°C und 180°C, eingebrannt wurde,
wobei der Kunststoff, der gemeinsam mit der Tauchlackierung aufgebracht wurde, beim Einbrennen der kathodischen Tauchlackierung oder nach dem Aufbringen
auf die eingebrannte kathodische Tauchlackierung aufgeschmolzen wurde.

2. Verbundbauteil nach Anspruch 1,
**dadurch gekennzeichnet,**
**dass** das metallische Bauteil aus Stahl, Aluminium oder Magnesium besteht.

3. Verbundbauteil nach den Ansprüchen 1 bis 2,
**dadurch gekennzeichnet,**
**dass** der Kunststoff aus Polyetheretherketon, Polyphenylensulfid, Polyvinylchlorid, Polyethylen, Polypropylen oder Polyamiden besteht.

4. Verbundbauteil nach den Ansprüchen 1 bis 3,
**dadurch gekennzeichnet,**
**dass** der Kunststoff als extrudierte, geschäumte oder aufgespritzte Schicht oder als Folie oder Tape auf dem metallischen Bauteil aufgebracht ist.

5. Verbundbauteil nach einem der Ansprüche 1 bis 4,
**dadurch gekennzeichnet,**
**dass** das metallische Bauteil mit einem korrosionsschützenden metallischen Überzug versehen ist.

6. Verbundbauteil nach Anspruch 5,
**dadurch gekennzeichnet,**
**dass** der metallische Überzug aus Zink oder überwiegend aus Zink besteht.

7. Verbundbauteil nach Anspruch 5 und 6,
**dadurch gekennzeichnet,**
**dass** der metallische Überzug ein Schmelztauchüberzug oder elektrolytisch abgeschiedener Überzug ist.

8. Verfahren zur Herstellung eines Metall/Kunststoff-Verbundbauteils, wobei das metallische Bauteil mit einem darauf aufgebrachten thermoplastischen Kunststoff stoffschlüssig verbunden wird,
**dadurch gekennzeichnet,**
**dass** für einen stoffschlüssigen Haftungsverbund zwischen metallischem Bauteil und Kunststoff auf das metallische Bauteil auf den mit dem Kunststoff in Kontakt tretenden Oberflächenbereichen vor dem Aufbringen des Kunststoffs eine korrosionsschützende Beschichtung in Form einer Phosphatierung aufgetragen wird,
**dadurch gekennzeichnet,**
**dass** das metallische Bauteil nach Auftragen der Phosphatierung eine kathodische Tauchlackierung erhält, welche entweder gemeinsam mit dem anschließend darauf aufgebrachten Kunststoff oder vor Aufbringen des Kunststoffes bei einer Temperatur von 160 °C bis 220 °C, vorteilhaft zwischen 160°C und 180°C, eingebrannt wird,
wobei der Kunststoff, der gemeinsam mit der Tauchlackierung aufgebracht wurde, beim Einbrennen der kathodischen Tauchlackierung oder nach dem Aufbringen
auf die eingebrannte kathodische Tauchlackierung aufgeschmolzen wird.

9. Verfahren nach Anspruch 8,
**dadurch gekennzeichnet,**
**dass** das metallische Bauteil aus einem kalt- oder warmumgeformten Blechzuschnitt aus Stahl, Aluminium oder Magnesium hergestellt wird.

10. Verfahren nach den Ansprüchen 8 bis 9,
**dadurch gekennzeichnet,**
**dass** der Blechzuschnitt aus einem mit einem korrosionsschützenden metallischen Überzug versehenen monolithischen Metallband oder einem Metall/Kunststoff/Metall-Sandwichblech hergestellt wird.

11. Verfahren nach Anspruch 10,
**dadurch gekennzeichnet,**
**dass** das Metallband mit Zink oder mit einer Zinklegierung elektrolytisch oder mittels Schmelztauchen überzogen wird.

## Claims

1. Metal/plastics composite component, in which the metal component is integrally bonded to a thermoplastic material applied thereon, the metal component comprising, on the surface regions which come into contact with the plastics material, an anti-corrosion coating consisting of a phosphate coating for an integral adhesive bond between the metal component and the plastics material, **characterised in that** a cathodic dip coating was applied to the phosphate coating, and this was baked either together with the plastics material applied thereon or before application of the plastics material at a temperature of from 160°C to 220°C, advantageously between 160°C and 180°C, the plastics material which was applied together with the dip coating being melted when baking the cathodic dip coating or after application onto the baked cathodic dip coating.

2. Composite component according to claim 1, **characterised in that** the metal component consists of steel, aluminium or magnesium.

3. Composite component according to claims 1 to 2, **characterised in that** the plastics material consists of polyether ether ketone, polyphenylene sulphide, polyvinyl chloride, polyethylene, polypropylene or polyamides.

4. Composite component according to claims 1 to 3, **characterised in that** the plastics material is applied to the metal component as an extruded, foamed or sprayed-on layer or as a film or tape.

5. Composite component according to any of claims 1 to 4, **characterised in that** the metal component is provided with an anti-corrosion metal coat.

6. Composite component according to claim 5, **characterised in that** the metal coat consists of zinc or consists predominantly of zinc.

7. Composite component according to claims 5 and 6, **characterised in that** the metal coat is a hot-dip coat or electrodeposited coat.

8. Method for producing a metal/plastics composite component, the metal component being integrally bonded to a thermoplastic material applied thereon, **characterised in that**, for an integral adhesive bond between the metal component and the plastics material, an anti-corrosion coating in the form of a phosphate coating is applied onto the metal component on the surface regions which come into contact with the plastics material, before the plastics material is applied, **characterised in that**, after the phosphate coating has been applied, the metal component is given a cathodic dip coating which is baked either together with the plastics material subsequently applied thereon or before application of the plastics material at a temperature of from 160°C to 220°C, advantageously between 160°C and 180°C, the plastics material which was applied together with the dip coating being melted when baking the cathodic dip coating or after application onto the baked cathodic dip coating.

9. Method according to claim 8, **characterised in that** the metal component is produced from a cold-formed or hot-formed sheet metal blank made of steel, aluminium or magnesium.

10. Method according to claims 8 to 9, **characterised in that** the sheet metal blank is produced from a monolithic metal strip provided with an anti-corrosion metal coat or from a metal/plastics/metal sandwich sheet.

11. Method according to claim 10, **characterised in that** the metal strip is coated with zinc or with a zinc alloy electrolytically or by means of hot dipping.

## Revendications

1. Pièce composite métal/plastique, la pièce métallique étant assemblée avec une liaison par matière à un plastique thermoplastique appliqué sur elle,
dans laquelle, pour un assemblage par adhérence avec une liaison par matière entre la pièce métallique et le plastique, la pièce métallique présente, sur les zones superficielles entrant en contact avec le plastique, un revêtement anticorrosion, constitué d'une phosphatation,
**caractérisée en ce qu'**on a appliqué sur la phosphatation un vernis au trempé par immersion cathodique, et on l'a cuit au four, en même temps que le plastique appliqué par-dessus ou avant application du plastique, à une température de 160 °C à 220 °C, avantageusement entre 160 °C et 180 °C,
le plastique qui avait été appliqué en même temps que le vernis au trempé ayant été fondu lors de la cuisson au four du vernis au trempé par immersion cathodique, ou après application sur le vernis au trempé par immersion cathodique ayant subi une cuisson au four.

2. Pièce composite selon la revendication 1, **caractérisée en ce que** la pièce métallique est constituée d'acier, d'aluminium ou de magnésium.

3. Pièce composite selon les revendications 1 à 2, **caractérisée en ce que** le plastique est constitué de polyétheréthercétone, de poly(sulfure de phénylène), de poly(chlorure de vinyle), de polyéthylène, de polypropylène ou de polyamides.

4. Pièce composite selon les revendications 1 à 3, **caractérisée en ce que** le plastique est appliqué sur la pièce métallique sous forme d'une couche appliquée par extrusion, moussage ou pulvérisation, ou sous forme d'une feuille ou d'un ruban.

5. Pièce composite selon l'une des revendications 1 à 4, **caractérisée en ce que** la pièce métallique est pourvue d'un revêtement métallique anticorrosion.

6. Pièce composite selon la revendication 5, **caractérisée en ce que** le revêtement métallique est constitué de zinc ou essentiellement de zinc.

7. Pièce composite selon les revendications 5 et 6, **caractérisée en ce que** le revêtement métallique est un revêtement par immersion à chaud ou un revêtement déposé par voie électrolytique.

8. Procédé de fabrication d'une pièce composite métal/plastique, la pièce métallique étant assemblée avec une liaison par matière à un plastique thermoplastique appliqué par-dessus, **caractérisé en ce que**, pour un assemblage par adhérence avec une liaison par matière entre la pièce métallique et le plastique, on applique sur la pièce métallique, sur les zones superficielles entrant en contact avec le plastique, avant l'application du plastique, un revêtement anticorrosion sous forme d'une phosphatation,
**caractérisé en ce que** la pièce métallique, après application de la phosphatation, reçoit un vernis au trempé par immersion cathodique, qui, en même temps que le plastique appliqué ensuite par-dessus ou avant application du plastique, est cuit au four à une température de 160 °C à 220 °C, avantageusement entre 160 °C et 180 °C,
le plastique qui avait été appliqué en même temps que le vernis au trempé étant fondu lors de la cuisson au four du vernis au trempé par immersion cathodique ou après application sur le vernis au trempé par immersion cathodique ayant subi une cuisson au four.

9. Procédé selon la revendication 8, **caractérisé en ce que** la pièce métallique est fabriquée à partir d'une découpe de tôle, formée à froid ou à chaud, en acier, aluminium ou magnésium.

10. Procédé selon les revendications 8 à 9, **caractérisé en ce que** la découpe de tôle est fabriquée à partir d'une bande métallique monolithique pourvue d'un revêtement métallique anticorrosion ou d'une tôle sandwich métal/plastique/métal.

11. Procédé selon la revendication 10, **caractérisé en ce que** la bande métallique est revêtue de zinc ou d'un alliage de zinc, par voie électrolytique ou par immersion à chaud.
